**Europäisches Patentamt**

**European Patent Office** .

**Office européen des brevets**

(11) Veröffentlichungsnummer: **0 041 670**

**A1**

(12) **EUROPÄISCHE PATENTANMELDUNG**

(21) Anmeldenummer: **81104154.0**

(22) Anmeldetag: **01.06.81**

(51) Int. Cl.³: **A 23 L 3/18**
**A 23 C 3/02**

(30) Priorität: **06.06.80 DE 3021265**

(43) Veröffentlichungstag der Anmeldung:
**16.12.81 Patentblatt 81/50**

(84) Benannte Vertragsstaaten:
**AT BE CH DE FR GB IT LI NL SE**

(71) Anmelder: **HOECHST AKTIENGESELLSCHAFT**
**Postfach 80 03 20**
**D-6230 Frankfurt/Main 80(DE)**

(72) Erfinder: **Bock, Hartmut, Dr.**
**Behringstrasse 30**
**D-6233 Kelkheim (Taunus)(DE)**

(54) **Verfahren zur kontinuierlichen Aufbereitung von Nährlösungen durch Erhitzen im Durchlauf.**

(57) Die Erfindung betrifft ein Verfahren zur Aufbereitung von Nährlösungen durch kontinuierliches Erhitzen im Durchlauf und eine Vorrichtung zur Durchführung des Verfahrens. Das Erhitzen der Nährlösung erfolgt unter Druck und in einer oder zwei Stufen. Die erhitzte Nährlösung wird gekült und danach druckentspannt. Die erfindungsgemäße Vorrichtung besteht aus einem kontinuierlichen Druckerzeuger (1), der über Leitungen in Reihe mit einem ersten Erhitzer (2a) und einem ersten Verweilgefäß (3a) und danach gegebenenfalls einem zweiten Erhitzer (2b) und einem zweiten Verweilgefäß (3b), und ferner mit einer Kühleinrichtung (4) sowie danach mit einer Druckhalte- und Druckentspannungsvorrichtung (5) verbunden ist.

FIG.1

EP 0 041 670 A1

HOECHST AKTIENGESELLSCHAFT HOE 80/F 114          Dr.EL/jk


Verfahren zur kontinuierlichen Aufbereitung von Nährlösungen durch Erhitzen im Durchlauf

Nährlösungen werden meist in sterilem Zustand eingesetzt.
Beispiele sind industrielle Fermentationen, wo Nährlösungen entweder kontinuierlich oder chargenweise zugegeben
werden, sowie die Nahrungsmittelindustrie etwa bei der
Herstellung von Babykost, wo die Nährlösungen vor dem
Versand sterilisiert werden müssen. In den meisten Fällen
wird ein kontinuierliches Sterilisieren, d. h. im Durchlauf, bevorzugt.

Das Sterilisieren von Nährlösungen erfolgt meist durch
Erhitzen. Am Beispiel von zwei für die Fermentation typischen Nährlösungen wird das bisherige Verfahren geschildert, das auch für andere Anwendungen gilt.

Zuckerlösung ist die einzige Nährlösung, die bislang
standardmäßig im Durchlauf sterilisiert wird. Üblich ist
dabei das Erhitzen im Wärmetauscher. Infolge der von außen
zugeführten Wärme backt der Zucker im Wärmetauscher leicht
an und setzt damit die Leitungen zu. Häufige und damit
kostspielige Wartung ist die Folge. Dies ist insbesondere
bei nicht einwandfreier Druckhaltung der Fall. Wärmetauscher sind außerdem relativ aufwendige Apparaturen.

Konzentrierte Stärkelösung wird bisher in der Vorlage bzw.
im Verarbeitungsgefäß selbst sterilisiert, d. h. im Falle
der Fermentation: Die benötigte Menge an Stärkelösung wird
vor Beginn der Fermentation in den Fermenterkessel eingegeben und dort in zwei Stufen sterilisiert: Bei etwa $75^{o}C$
bauen die Stärkemoleküle Wasser ein und vernetzen zu "Pudding". Gibt man jedoch in ausreichender Menge ein geeignetes Enzym hinzu, z. B. Amylase oder Rapidase, und rührt ständig, so werden die Stärkemoleküle soweit gespalten, daß die Lösung flüssig bleibt. Nach einer Verweilzeit von wenigen Minuten bei dieser Temperatur kann nunmehr sterilisiert werden, z. B. bei 120°C. Ein zu frühes Anheben der Temperatur würde die Wirkung des Fermentes abtöten. Nach dem Sterilisieren wird abgekühlt und die dann kalte und sterile Nährlösung mit Pilzgut geimpft. Bei diesem Vorgehen besteht die Gefahr, daß wegen der großen Menge an von vornherein vorhandener Nährlösung die Pilze unkontrolliert und meist zu schnell wachsen und damit keine optimale Produktion von Antibiotika erzielt wird.

Abweichend hierzu wird im Einzelfall verdünnte Stärkelösung (maximal 15 Gew.%) auch im Durchlauf erhitzt. Die Temperaturführung geschieht hierbei, wie oben beschrieben, in zwei Stufen und unter Zusatz eines Enzyms. Bei der ersten Stufe ist auch schon das Einleiten von Sattdampf unter Druck eingesetzt worden. Derartig verdünnte Lösungen eignen sich jedoch nicht zur Nachgabe in einen Fermenter, da sie durch ihren großen Wasseranteil die Kulturlösung für die Pilze zu sehr verdünnen. Auch in der Nahrungsmittelindustrie, z. B. bei Babykost, muß nach dem Sterilisieren eine konzentrierte Lösung vorliegen. Auch hier wird ein Durchlaufverfahren (kontinuierliches Verfahren) wegen seiner Flexibilität bevorzugt. Konzentrierte Stärkelösungen ($>$15 Gew.%) konnten jedoch bisher für keine Anwendung im Durchlauf sterilisiert werden. In Fachkreisen wurde ein solches Verfahren auch stets für schwierig, wenn nicht gar für aussichtslos in der Realisierung, gehalten.

Aufgabe der Erfindung war es, eine Vorrichtung zur Verfügung zu stellen, die es ermöglicht, Nährlösungen hoher Konzentration, vor allem auch Stärkelösung, im kontinuierlichen Durchgang ohne Verkleben oder Verstopfen der Leitung durch die Nährlösung zu sterilisieren.

Diese Aufgabe wird erfindungsgemäß gelöst dadurch, daß die Nährlösung eine Konzentration von vorzugsweise mindestens 30 Gew.-% hat, daß das Erhitzen unter Druck und in einer oder zwei Stufen erfolgt, und daß die erhitzte Nährlösung gekühlt und danach druckentspannt wird.

Das erfindungsgemäße Verfahren wird in einer Vorrichtung durchgeführt, die dadurch gekennzeichnet ist, daß ein kontinuierlicher Druckerzeuger über Leitungen in Reihe mit einem ersten Erhitzer und einem ersten Verweilgefäß, welches das Halten einer vorgegebenen ersten Temperatur ermöglicht, und danach gegebenenfalls mit einem zweiten Erhitzer und einem zweiten Verweilgefäß, welches das Halten einer vorgegebenen zweiten Temperatur ermöglicht, und ferner mit einer Kühleinrichtung, sowie danach mit einer Druckhalte- und Druckentspannungsvorrichtung verbunden ist.

Nach dem erfindungsgemäßen Verfahren und mit der erfindungsgemäßen Vorrichtung lassen sich die verschiedensten Nährlösungen bis zu Konzentrationen von 50 % und darüber durch kontinuierliches Erhitzen aufbereiten, vorzugsweise sterilisieren. Als Nährlösungen, die erfindungsgemäß aufbereitet werden können, kommen in Frage Nährlösungen für Pilzkulturen, z. B. in Fermentationen, die die verschiedensten Zucker, Dextrine und Stärkearten enthalten, ferner Nährmittellösungen für Mensch und Tier, die in hohen Konzentrationen auch pastös sein können, z. B. Babykost.

Im folgenden werden das erfindungsgemäße Verfahren und die Vorrichtung zu seiner Durchführung beispielhaft für eine zweckmäßige Ausführungsform näher beschrieben.

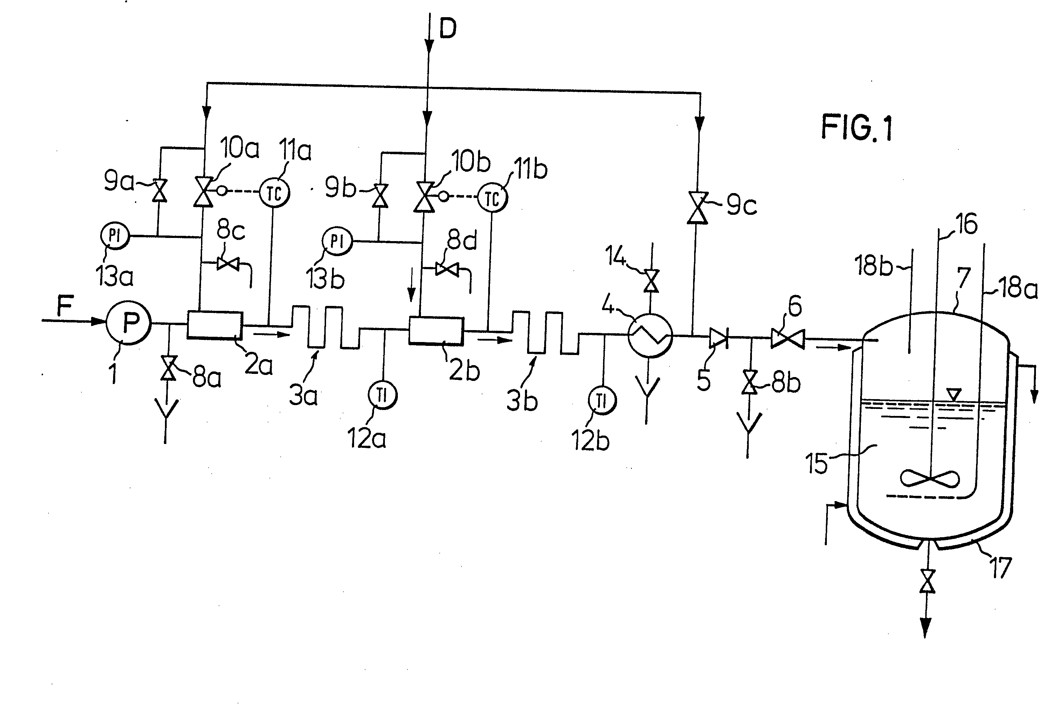

Figur 1 zeigt das Fließschema für eine erfindungsgemäße Anlage mit Direktdampferhitzern in beiden Erhitzungsstufen.

Figur 2 zeigt den Querschnitt durch einen Direktdampferhitzer für das Einleiten von Sattdampf in eine
Nährlösung unter Druck.

Im einzelnen bedeuten:

| | |
|---|---|
| 1 | Pumpe (Druckerzeuger) |
| 2a, b | Erhitzer (Erwärmer) |
| 3a, b | Verweilgefäß |
| 4 | Kühleinrichtung |
| 5 | Druckhalte- und Druckentspannungsvorrichtung |
| 6 | Absperrorgan (Hahn, Ventil) |
| 7 | Fermenter (Gefäß zur Weiterverarbeitung) |
| 8a, b, c, d | Absperrorgan (Hahn, Ventil) |
| 9a, b, c | Absperrorgan (Hahn, Ventil) |
| 10a, b | Regelventil |
| 11a, b | Temperaturmeß- und -regel-Einrichtung |
| 12a, b | Temperaturmeßgerät |
| 13a, b | Druckmeßgerät |
| 14 | Absperrorgan (Hahn, Ventil) |
| 15 | Kulturlösung |
| 16 | Rührer |
| 17 | Heiz- bzw. Kühlmantel |
| 18a | Einlaß zum Belüften der Kulturlösung |
| 18b | Zugaberohr(e) für Pilzkulturlösung und ggf. Hilfs-mittel |
| D | Dampf |
| F | zu erhitzende Flüssigkeit (Wasser, Nährlösung) |
| 19a | kalte Nährlösung |
| 19b | heiße Nährlösung |
| 20 | Mischdüse |
| 21 | Dampfeinlaßkanäle in die Mischdüse (20) |
| 22 | Mischkanal in der Mischdüse (20) |
| 23 | Dichtungsring |
| 24 | Dampfvorkammer |

Die Pumpe (1) (kontinuierlicher Druckerzeuger) ist über Leitungen in Reihe mit dem ersten Erhitzer (2a), dem ersten Verweilgefäß (3a), dem zweiten Erhitzer (2b), dem zweiten Verweilgefäß (3b), der Kühleinrichtung (4), der Druckhalte- und Druckentspannungsvorrichtung (5), dem Absperrorgan (6) (Hahn, Ventil) und dem Fermenter (7) (Gefäß zur Weiterverarbeitung) verbunden.

Die Pumpe (1) dient zum Einspeisen der Nährlösung in den Erhitzer (2a) und zum Erzeugen eines Druckes in diesem und den nachfolgenden Anlagenteilen bis zur Druckhalte- und Druckentspannungsvorrichtung (5). Der Pumpentyp wird am besten so gewählt, daß ein gleichmäßiger Druck entsteht. Bei Verwendung einer Kolbenpumpe ist es also zweckmäßig, den Einbau eines Druckausgleichsgefäßes, z. B. eines Windkessels, vorzusehen.

Im Erhitzer (2a) wird die Nährlösung auf eine erste Temperatur ($T_1$) erhitzt. Dargestellt ist die bevorzugte Ausführungsform der Erwärmung mittels eines Direktdampferwärmers, in dem Sattdampf in die den Erhitzer durchströmende Nährlösung unter Druck eingeleitet wird. Die Menge des Dampfes wird so gewählt, daß die Temperatur der Nährlösung am Ausgang des Erhitzers (2a) dem gewünschten Wert von $T_1$ entspricht.

Dies wird durch einen Temperaturregelkreis erzielt. Dieser besteht aus dem Dampfregelventil (10a) und der Temperaturmeß- und -regel-Einrichtung (11a). Durch Einstellen des Sollwertes der Temperaturregeleinrichtung läßt sich die Temperatur nach dem Ausgang des Erhitzers (2a) frei wählen, z. B. 80$^\circ$C.

Nach Verlassen des Erhitzers (2a) durchströmt die auf $T_1$ erwärmte Nährlösung das Verweilgefäß (3a). Im einfachsten Fall ist dies - häufig ausreichend - ein einfaches Rohr. Ein Rührer ist nicht erforderlich.

Nach Verlassen des Verweilgefäßes (3a) durchströmt die Nährlösung den zweiten Erhitzer (2b). In diesem wird sie auf eine zweite Temperatur ($T_2$) erhitzt. Auch hier ist dargestellt die bevorzugte Ausführungsform der Erwärmung mittels eines Direktdampferhitzers, in dem Sattdampf in die den Erhitzer durchströmende Nährlösung unter Druck eingeleitet wird. Die Menge des Dampfes wird so gewählt, daß die Temperatur der Nährlösung am Ausgang des Erhitzers (2b) dem gewünschten Wert von $T_2$ entspricht, z. B. 130°C.

Dies wird auch hier durch einen aus Dampfregelventil und Temperatur-meß- und -regel-Einrichtung (10b bzw. 11b) bestehenden Temperaturregelkreis erzielt durch Einstellen des Sollwertes der Temperaturregeleinrichtung.

Nach Verlassen des Erhitzers (2b) durchströmt die auf $T_2$ erwärmte Nährlösung das Verweilgefäß (3b), im einfachsten Fall auch hier - häufig ausreichend - ein einfaches Rohr.

Nach Verlassen des Verweilgefäßes (3b) fließt die Nährlösung durch die Kühleinrichtung (4), beispielsweise durch einen mit Kühlwasser beschickten Wärmetauscher mit Absperrorgan (14) im Wasserzulauf.

Die in der Kühleinrichtung (4) gekühlte Nährlösung wird in der Druckhalte- und Druckentspannungsvorrichtung (5) druckentspannt, passiert das Absperrorgan (6) und gelangt dann kalt und druckentspannt zur Weiterverarbeitung, z. B. in den laufenden Fermenter (7), der zweckmäßigerweise mit einem Heiz- bzw. Kühlmantel (17), einem Rührer (16), einem Einlaß zum Belüften der Kulturlösung (18a) und einem oder mehreren Zugaberohren für Pilzkulturlösung und gegebenenfalls Hilfsmittel (18b) versehen ist, und der mit der Kulturlösung (15) beschickt ist.

Bei der geschilderten Erwärmung der Nährlösung mittels
Sattdampf nimmt jene entsprechend dem Dampfverbrauch zum
Erwärmen eine bestimmte Menge Kondensatwasser auf. Bei
Erwärmung von z. B. 20 auf 120°C liegt diese Menge je
nach der Güte der Wärmeisolierung der Anlage bei etwa 15
bis 20 %, bezogen auf das Gewicht der erwärmten Nährlösung. Diese geringe Verdünnung stört nicht.

Zum Erwärmen der Nährlösung können als Erhitzer (2a) und/
oder (2b) selbstverständlich auch ein Wärmetauscher,
der beispielsweise mit Dampf oder einer Wärmeträgerflüssigkeit betrieben wird, oder andere indirekte oder direkte
Heizmethoden verwendet werden.

Nach dem Ausgang der Verweilgefäße (3a bzw. 3b) kann zur
Kontrolle noch ein Temperaturmeßgerät vorgesehen sein (12a
bzw. 12b). Zur Druckkontrolle dienen die gegebenenfalls
vorgesehenen Druckmeßgeräte (13a bzw. 13b).

Die vorstehend beschriebene Vorrichtung zur Aufarbeitung
einer Nährlösung in zwei Erhitzungsstufen ist erforderlich,
wenn die Nährlösung eine Stärkelösung ist. In der ersten
Stufe wird die Stärke durch ein geeignetes bekanntes, der
Nährlösung vor Eintritt in den Druckerzeuger (1) hinzugefügtes Enzym (Ferment) hydrolysiert (Hydrolysierstufe).
In der zweiten Stufe erfolgt eine weitere Erhitzung, die
vorzugsweise zur Sterilisierung dient (Sterilisierstufe).

Die Abmessungen der Verweilgefäße (3a) und (3b) bestimmen
die jeweilige Verweilzeit der Nährlösung und damit die
Dauer der Hydrolyse bzw. Sterilisierung. Die Verweilgefäße
sind zweckmäßigerweise austauschbar angeordnet, um verschiedene Verweilzeiten zu erzielen bzw. um bei verschiedenen Durchflüssen etwa die gleiche Verweilzeit zu erhalten.

Die der Stärkelösung vorab beigemischte Enzymmenge muß ausreichend sein, um die Stärkelösung bis zum Weiterverarbeitungsgefäß flüssig zu halten. Die Temperatur in der Hydrolysierstufe beträgt zweckmäßigerweise 65 bis 100°C, vorzugsweise 75 bis 90°C, die Verweilzeit bei dieser Temperatur mindestens 1 bis 2 Minuten.

Bei anderen Nährlösungen erfolgt das Erhitzen vorzugsweise in einer Stufe, z. B. bei Lösungen von Zucker oder Dextrin in Wasser. In diesem Fall ist entweder der Ausgang der Pumpe (1) mit dem Eingang des Erhitzers (2b) oder der Ausgang des Verweilgefäßes (3a) mit dem Eingang der Kühleinrichtung (4) direkt verbunden.

Beim Anfahren der erfindungsgemäßen Vorrichtung wird zweckmäßigerweise zunächst die gesamte Anlage selbst sterilisiert, z. B. wie folgt:

Dampf wird durch das Ventil (9c) in die Anlage eingeleitet. Dieser strömt einerseits durch die Druckentspannungseinrichtung (5) und den Hahn (6) und andererseits durch die Kühleinrichtung (4), das Verweilgefäß (3b), den Erhitzer (2b), das Verweilgefäß (3a) und den Erhitzer (2a), sowie durch die geöffneten Hähne (8a) bis (8d). Nach ausreichendem Sterilisieren (in Abhängigkeit von der Temperatur und der Dauer) werden die Regelventile (10a) und (10b) in Handstellung entsprechend der später zu erwartenden Öffnung ungefähr eingestellt. Falls erforderlich, können in dieser Zeitphase auch die Hähne (9a) und (9b) zusätzlich geöffnet sein. Die Hähne (8a), (8c) und (8d) und danach (8b) und (9c) werden nun geschlossen. Die Druckhalte- und Druckentspannungseinrichtung (5) sorgt für die Einstellung des Betriebsdruckes. Nach dem Schließen der Hähne (8a) bis (8d) und (9a) bis (9c) wird die Pumpe (1) eingeschaltet und mittels dieser zunächst Wasser (F = Wasser) durch die Anlage gefördert und dabei sterilisiert. Gleichzeitig können die Temperaturmeß- und -regel-Einrichtungen (11a) und (11b) auf Automatik geschaltet werden. Nach Stabilisierung von Druck und Temperatur kann gegebenenfalls die Fördergeschwindigkeit der Pumpe (1) noch korrigiert werden, bevor auf die zu sterilisierende Nährlösung (F = Nährlösung) umgeschaltet wird.

Das vorstehend beschriebene Anfahren der Anlage ermöglicht ihre vollständige Sterilisierung, bevor Nährlösung durchgeleitet wird. Es genügt jedoch auch, lediglich die zweite Stufe zu sterilisieren, d. h. ab dem Erhitzer (2b) bis zum Weiterverarbeitungsgefäß (Fermenter (7)).

Das Wasser vom Anfahrvorgang wird bereits in den Fermenter (7) eingeleitet. Es kann aber auch, ebenso die Nährlösung, im sogenannten Stand-by-Betrieb über den Hahn (8b) bei geschlossenem Hahn (6) am Verarbeitungsgefäß (7) zunächst vorbeigeleitet werden.

Abhängig von der Fördergeschwindigkeit ist es erforderlich, die Erhitzer (2a) und (2b) und vor allem die folgenden Teile (Leitungen, Verweilgefäße (3a) und (3b)) mehr oder weniger gut gegen Wärmeverluste zu isolieren oder sogar gegebenenfalls mit einer Begleitheizung auszurüsten. Diese dient der Temperaturhaltung, d. h. der Kompensation der Wärmeverluste im Teil der Anlage vom Ausgang des Erhitzers (2a) über das Verweilgefäß (3a), den Erhitzer (2b) und das Verweilgefäß (3b) bis zur Kühleinrichtung (4). Sie wird aber nur zwingend benötigt, falls bei kleiner Fördergeschwindigkeit die Temperatur der Nährlösung schon vor Ende des Verweilgefäßes (3b) unter die Sterilisiertemperatur abzusinken droht. Die Begleitheizung wird gegebenenfalls bereits beim Anfahren der Anlage eingeschaltet. In den meisten Fällen wird aber eine passende Wärmeisolierung ausreichen.

Der Druck während des kontinuierlichen Erwärmens der Nährlösung im Durchlauf beträgt zweckmäßigerweise mindestens 3 bar, vorzugsweise 4 bis 12 bar.

Beim Abstellen der Anlage wird zunächst zum Zwecke des Spülens wieder auf Wasser umgeschaltet. Nach genügender Reinigungszeit werden die Pumpe (1) und die Dampfzufuhr abgestellt und gegebenenfalls mindestens einer der Hähne (8a) bis (8d) zur Druckentspannung der Anlage geöffnet.

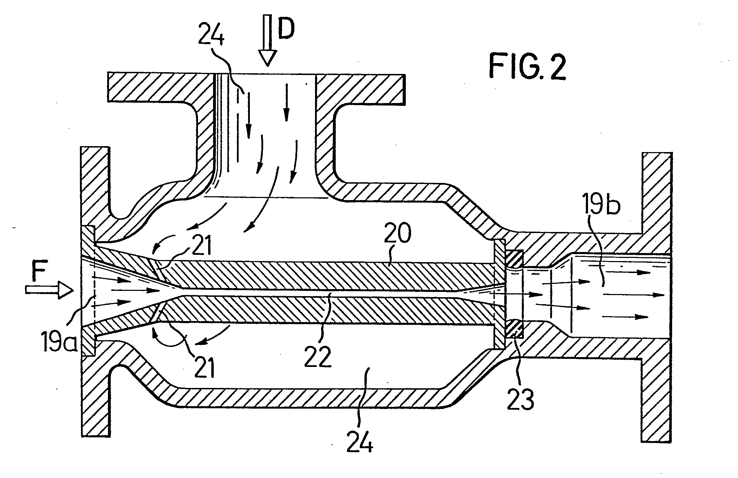

Figur 2 zeigt im Längsschnitt eine bevorzugte Ausführungsform eines Erhitzers, nämlich eines Direktdampferhitzers.

Die kalte Nährlösung (19a) wird unter Druck in einem engen Kanal (22) mit Sattdampf zwangsgemischt, der dabei kondensiert. Die den engen Kanal (22) enthaltende Mischdüse (20) hat an ihrem Eingang einen oder mehrere Einlässe (21) für Wasserdampf. Durchmesser und Länge des engen Kanals (22) und der Einlässe (21) müssen an den Durchsatz der Nährlösung angepaßt sein. Dieser kann minimal etwa 10 Liter pro Stunde betragen und ist bei geeigneter Wahl der Mischdüse nach oben an jeden technisch in Frage kommenden Bedarf anpaßbar. Am Ausgang der Mischdüse (20) tritt die erwärmte Nährlösung (19b) aus dem Direktdampferhitzer aus. Die Mischdüse (20) ist vorzugsweise austauschbar ausgebildet. Sie kann leicht gereinigt werden. Eine Dichtung (23) dichtet den Dampfraum (24) von der Nährlösung ab. Bei konstantem Druck der Nährlösung tritt keine Nährlösung in den Dampfraum (24) durch die Öffnungen (21) ein. Eine Gefahr hierfür besteht nur bei Druckstößen, z. B. bei Verwendung einer Kolbenpumpe ohne Windkessel als Druckerzeuger (1).

Mit dem erfindungsgemäßen Verfahren wird eine Reihe von Vorteilen erzielt: Nährlösungen aller Art - auch Stärkelösungen - bis zu Konzentrationen von 50 % und höher können im Durchlauf sterilisiert werden. Die Gefahr des Anbackens der Nährlösung ist wesentlich verringert. Durchflußänderungen während des kontinuierlichen Betriebes sind schnell und problemlos möglich. Bei Verwendung eines Direktdampferhitzers wird außerdem Energie gespart, weil die benötigte Energiemenge bis auf geringe Wärmeverluste nach außen dem theoretischen thermodynamischen Wert entspricht. Schließlich ist die erfindungsgemäße Vorrichtung wartungsfreundlich.

**0041670**

PATENTANSPRÜCHE

1. Verfahren zur Aufbereitung von Nährlösungen durch kontinuierliches Erhitzen im Durchlauf, dadurch gekennzeichnet, daß die Nährlösung eine Konzentration von vorzugsweise mindestens 30 Gew.% hat, daß das Erhitzen unter Druck und in einer oder zwei Stufen erfolgt, und daß die erhitzte Nährlösung gekühlt und danach druckentspannt wird.

2. Verfahren nach Anspruch 1, dadurch gekennzeichnet, daß das Erhitzen in der ersten und/oder zweiten Stufe durch Direkteinspeisung von Wasserdampf in die Nährlösung erfolgt.

3. Verfahren nach Anspruch 1 oder 2, dadurch gekennzeichnet, daß die Nährlösung eine Lösung von Zucker oder Dextrin in Wasser ist und das Erhitzen vorzugsweise in einer Stufe erfolgt.

4. Verfahren nach Anspruch 1 oder 2, dadurch gekennzeichnet, daß die Nährlösung eine Lösung von Stärke in Wasser ist, der vorab eine ausreichende Menge eines Enzyms zum Flüssighalten der Stärkelösung beigemischt wird, daß diese Stärkelösung in einer ersten Erhitzungsstufe auf 65 - 100°C, vorzugsweise 75 - 90°C, erhitzt wird, wobei die Verweilzeit bei dieser Temperatur mindestens 1 bis 2 Minuten beträgt, und daß die Stärkelösung danach in einer zweiten Erhitzungsstufe ohne Abkühlung bei einer höheren Temperatur weiterbehandelt wird.

5. Verfahren nach einem der Ansprüche 1 bis 4, dadurch gekennzeichnet, daß das Erhitzen der Nährlösung zu ihrer Sterilisierung erfolgt.

0041670

6. Verfahren nach einem oder mehreren der Ansprüche 1 bis 5, dadurch gekennzeichnet, daß die Nährlösung kontinuierlich in einen laufenden Fermenter eingespeist wird.

7. Verfahren nach einem der Ansprüche 1 bis 6, dadurch gekennzeichnet, daß der Druck während des Erhitzens bis zur Druckentspannung konstant gehalten wird und mindestens 3 bar beträgt, vorzugsweise 4 bis 12 bar.

8. Verfahren nach einem der Ansprüche 1 bis 7, dadurch gekennzeichnet, daß zeitlich vor und nach dem kontinuierlichen Erhitzen der Nährlösung im Durchlauf ein kontinuierliches Erhitzen von Wasser im Durchlauf erfolgt.

9. Vorrichtung zur Durchführung des Verfahrens nach Ansprüchen 1 bis 8, dadurch gekennzeichnet, daß ein kontinuierlicher Druckerzeuger über Leitungen in Reihe mit einem ersten Erhitzer und einem ersten Verweilgefäß, welches das Halten einer vorgegebenen ersten Temperatur ermöglicht, und danach gegebenenfalls mit einem zweiten Erhitzer und einem zweiten Verweilgefäß, welches das Halten einer vorgegebenen zweiten Temperatur ermöglicht, und ferner mit einer Kühleinrichtung, sowie danach mit einer Druckhalte- und Druckentspannungsvorrichtung verbunden ist.

10. Vorrichtung nach Anspruch 9, dadurch gekennzeichnet, daß der erste und/oder zweite Erhitzer ein Wärmetauscher ist.

11. Vorrichtung nach Anspruch 9, dadurch gekennzeichnet, daß der erste und/oder zweite Erhitzer eine Vorrichtung zum Einleiten von Sattdampf unter Druck in die Nährlösung ist.

12. Vorrichtung nach Anspruch 11, dadurch gekennzeichnet, daß die Vorrichtung zum Einleiten von Sattdampf mit einer auswechselbaren Mischdüse ausgestattet ist.

13. Vorrichtung nach einem der Ansprüche 11 oder 12, dadurch gekennzeichnet, daß am Ausgang des ersten und/oder zweiten Erhitzers eine Temperaturmeßeinrichtung angebracht ist, die ein Regelventil in der Dampfzuleitung des ersten und/oder zweiten Erhitzers in Abhängigkeit von der Temperatur der erhitzten Nährlösung steuert.

14. Vorrichtung nach einem der Ansprüche 9 bis 13, dadurch gekennzeichnet, daß das erste und/oder zweite Verweilgefäß austauschbar angeordnet ist.

FIG.1

0041670

0041670

FIG. 2

# EUROPÄISCHER RECHERCHENBERICHT

**0041670**

Europäisches Patentamt

Nummer der Anmeldung

**EP 81 10 4154.0**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE – A – 2 303 890 (STE DES PRODUITS NESTLE S.A.) * Ansprüche 1 bis 8, 11, 14, 20; Seite 7, Absatz 4 bis Seite 9, Absatz 2; Seite 12, Beispiel 1; Seite 14, Beispiel 2; Fig. * & CH – A – 566 726 & AT – B – 339 125 & GB – A – 1 347 415 -- | 1-3,5, 10,11 |
|  | DE – A1 – 2 758 707 (STORK AMSTERDAM B.V.) * Ansprüche 1 und 3; Seite 8, Absatz 5 bis Seite 9, Absatz 2; Fig. 1 * -- | 1,2,5, 10,13 |
|  | DE – A – 1 792 510 (SCHRÖDER & CO.) * Anspruch 1; Seite 2, Absatz 4 bis Seite 3 Absatz 1; Seite 4, Absatz 4 bis Seite 5, Absatz 1 * & GB – A – 1 253 905 -- | 1,5,10 |
| A | DE – B2 – 1 963 688 (HABRA-WERK et al.) -- |  |
| A,P | DE – A1 – 2 946 326 (STE DES PRODUITS NESTLE S.A. ---- |  |

**KLASSIFIKATION DER ANMELDUNG (Int. Cl.³)**

A 23 L 3/18
A 23 C 3/02

**RECHERCHIERTE SACHGEBIETE (Int. Cl.³)**

A 23 C 3/00
A 23 L 3/00

Der vorliegende Recherchenbericht wurde für alle Patentansprüche erstellt.

| Recherchenort | Abschlußdatum der Recherche | Prüfer |
|---|---|---|
| Berlin | 15-07-1981 | SCHULTZE |

EPA form 1503.1 08.78